Europäisches Patentamt

European Patent Office

Office européen des brevets

(19)

(11) Veröffentlichungsnummer : **0 247 288**
**B1**

(12)

# EUROPÄISCHE PATENTSCHRIFT

(45) Veröffentlichungstag der Patentschrift :
24.01.90

(51) Int. Cl.⁵ : **B 01 D 25/12**

(21) Anmeldenummer : **87102513.6**

(22) Anmeldetag : **23.02.87**

(54) **Filterpresse.**

(30) Priorität : **26.05.86 DE 3617651**

(43) Veröffentlichungstag der Anmeldung :
**02.12.87 Patentblatt 87/49**

(45) Bekanntmachung des Hinweises auf die Patenterteilung : **24.01.90 Patentblatt 90/04**

(84) Benannte Vertragsstaaten :
**BE CH DE ES FR GB IT LI**

(56) Entgegenhaltungen :
**GB—A— 2 110 104**

(73) Patentinhaber : **JV KUNSTSTOFFWERK GMBH
Obere Lerch 2
D-8544 Georgensgmünd (DE)**

(72) Erfinder : **Neu, Werner Dr.
Gieseckenkamp 24
D-3012 Langenhagen (DE)**

(74) Vertreter : **Keil, Rainer A., Dipl.-Phys. Dr. et al
KEIL & SCHAAFHAUSEN Patentanwälte Eysseneckstrasse 31
D-6000 Frankfurt am Main 1 (DE)**

## Beschreibung

Die Erfindung betrifft eine Filterpresse mit einer Vielzahl von Membranfilterplatten, die aus einer Grundplatte und aus mindestens einer an der Seitenfläche der Grundplatte angebrachten elastischen Membran bestehen, von denen die Grundplatte einen umlaufenden erhöhten ebenen Rand aufweist, der einen Rezeß einschließt, die Grundplatte am Übergang des Randes in den Rezeß eine umlaufende stufenförmige Vertiefung für die Aufnahme des Membranrandes aufweist, die stufenförmige Vertiefung der Grundplatte nach außen hin eine Hinterschneidung und nach innen hin eine Nut aufweist, die Membran einen als Randverstärkung ausgebildeten Membranrand von der Querschnittsform eines Winkels aufweist, deren einer nach außen gerichteter Schenkel einen abgeschrägten Rand aufweist, der auf der an der Grundplatte anliegenden Seite länger als auf der gegenüberliegenden Seite ist und deren anderer Schenkel auf die Grundplatte hin gerichtet ist und in deren Nut eingreift.

Membranfilterplatten dieser Art sind aus der DE-OS 34 24 325 bekannt geworden. Die Grundplatte dieser Membranfilterplatte wird vorzugsweise aus Kunststoff, insbesondere aus Polypropylen, gefertigt, während die Membran aus einem Elastomer, vorzugsweise Gummi, gefertigt wird.

Während früher die Membranen den ganzen Rand der Grundplatte überdeckten und an der Außenkante der Membran befestigt wurden, ist bei der Membranfilterplatte der US-PS 36 56 622 der Rand der Grundplatte nur teilweise von dem Rand der Membran überdeckt. Die Membran weist hier eine Randverstärkung von der Querschnittsform eines Schwalbenschwanzes auf, die in eine schwalbenschwanzförmige Nut eingreift. Diese Randverstärkung steht über die Randfläche der Grundplatte hinaus, so daß auch bei dieser Ausführungsform die Membranen mit ihrer Randverstärkung entweder (bei beidseitig mit Membranen versehenen Grundplatten) aneinander oder (bei einseitig mit Membranen versehenen Grundplatten) an der benachbarten Platte anliegen. Beim Einsatz in der Filterpresse werden die Membranen in ihrem Randbereich stark durch Druck belastet. Da Gummi ein inkompressibles Medium ist, beginnt das Gummi zwischen den Grundplatten zu fließen, um diesem Druck auszuweichen. Dieses Fließen der Randverstärkungen der aus Gummi hergestellten Membranen vermindert die Lebensdauer der Membranen erheblich. Um die Belastung der Randverstärkungen der Membranen in Grenzen zu halten, kann in den Filterpressen nur mit verringertem Druck gearbeitet werden. Die Verringerung des Schließdruckes der Filterpressen führt zwar zu einer Verlängerung der Lebensdauer der Membranen, führt aber andererseits auch dazu, daß in der Filterpresse selbst beim Filtern mit geringeren Drücken und damit mit geringerem Wirkungsgrad gearbeitet werden muß.

Die aufgezeigten Nachteile versucht die GB-OS 21 53 248 zu vermeiden, indem hier eine Membran aus einem thermoplastischen Kunststoff verwendet wird, die als Randverstärkung eine Lippe aufweist, die in eine Nut der Grundplatte eingreift und nur von einer Fläche der benachbarten Platte in dichtendem Eingriff in der Nut derart gehalten wird, daß ein Zusammendrücken von Membranen zwischen den benachbarten Platten weitgehend vermieden wird. Hiermit allein läßt sich jedoch die Lebensdauer der Membranen nicht verlängern. Es muß zusätzlich noch eine weitere, parallele Nut in der Grundplatte vorgesehen werden, welche einen im Querschnitt halbkreisringförmigen Abschnitt des Randes der Membran aufnimmt, damit die Membran an dieser Stelle eine erhöhte Elastizität gewinnt. Das führt zu einer vergrößerten Breite des Randbereiches der Grundplatte und somit zu einer erniedrigten Aufnahmefähigkeit der Filterkammern zwischen den Membranen für das Filtergut. Diese Ausgestaltung weist aber auch den weiteren Nachteil auf, daß die Membranen zu beiden Seiten einer Filterplatte miteinander im Bereich des zentralen Loches verbunden sein müssen, um nicht bei der Herausnahme des Filtergutes bei geöffneter Filterpresse und vertikal angeordneten Grundplatten herauszufallen und dann wieder neu montiert werden zu müssen. Derartige Verbindungen zweier Membranen lassen sich nur bei kleinen Abmessungen von Membranfilterplatten realisieren, die Montage der Membranen ist hierdurch erschwert.

Diesen Nachteil weist die Membranfilterplatte der DE-OS 34 24 325 nicht auf: Die zu beiden Seiten der Membranfilterplatte angeordneten Membranen sind nicht miteinander verbunden, sondern werden einzeln montiert und erhalten ihren festen Sitz durch eine Randverstärkung der Membran die die Querschnittsform eines Winkels aufweist, deren einer nach außen gerichteter Schenkel einen abgeschrägten Rand aufweist, und dadurch auf der an der Grundplatte anliegenden Seite länger als auf der gegenüberliegenden Seite ist und deren anderer Schenkel auf die Grundplatte hin gerichtet ist und in eine Nut in der Grundplatte eingreift. Dabei steht dieser Membranrand über die Randebene der Grundplatte nur um ein Geringes, nämlich um eine Einfederungshöhe, hinaus. Der nicht von dem Rand der Membran bedeckte Teil des rahmenförmigen Randes des Grundkörpers bildet die Dichtfläche und überträgt die Schließkraft. Die Membran wird hier nur wenig beansprucht, wegen des nahezu völlig inkompressiblen Verhaltens des Gummis der Membran müssen jedoch wegen der Fertigungsabweichungen Räume geschaffen sein, in die das Gummi ausweichen kann. Bei erheblichen Maßabweichungen des Randes der Gummimembran tritt auch hier wieder ein unerwünschtes Fließen auf.

Die hier aufgezeigten Maßnahmen dienen sämtlich dazu, die Filterkammer zwischen zwei Membranen bzw. zwischen einer Membran und einer anliegenden Fläche einer benachbarten Platte so dicht zu halten, daß im Inneren der zwischen den Membranen gebildeten Filterkammern mit hohem Filtrierdruck gearbeitet werden kann. Aber nicht nur während des Filtriervorganges wird mit Druck (in der Filterkammer) gearbeitet, mit noch höherem Druck wird am Ende des Filtriervorganges an einer anderen Stelle geargeitet, nämlich im Raum zwischen der Membran und der Grundplatte, und zwar zu dem Zweck, vor dem Öffnen der Filterpresse den Filterkuchen noch kräftig zusammenzudrücken, um in ihm noch enthaltene Flüssigkeit aus dem Filterkuchen herauszudrücken. Das hier verwendete Druckmedium darf nicht in das Innere der Filterkammer gelangen, daher sind noch besondere Abdichtungsmaßnahmen vorzusehen, die im Stande der Technik oft nicht ausreichend oder nur unter erhöhtem Aufwand erzielbar sind.

Die Erfindung vermeidet diese Nachteile. Es ist die Aufgabe der Erfindung, die Membranen überhaupt nicht mehr mit dem Schließdruck der Filterpresse zu beaufschlagen und mit einfachen Mitteln eine hervorragend gute Abdichtung sowohl der Filterkammer als auch des Raumes zwischen der Membran und der Grundplatte zu erreichen.

Die Erfindung erreicht dieses dadurch, daß der Membranrand zwischen der Hinterschneidungsfläche und der dem Rezeß zugewandten Schenkelwand der Nut in die Grundplatte eingeklemmt (verkeilt) ist, daß die Oberfläche des Membranrandes unterhalb der Randebene der Grundplatte liegt und daß die Ränder der Grundplatten in der Filterpresse lediglich unter eventuellem Einschluß von Filtertüchern und/oder Dichtungen zwischen sich aneinanderliegen.

Diese Anordnung der Membran hat den Vorteil, daß die Membran überhaupt nicht vom Schließdruck der Filterpresse beaufschlagt wird und somit das Gummi der Membran überhaupt nicht zu einem Fließen unter dem Schließdruck kommt. Das erhöht die Lebensdauer der Membran erheblich. Dabei ist durch die Randabdichtung der mit den Rändern aneinanderliegenden Grundplatten sowie durch die Abdichtwirkung des verkeilten Randes der Membran eine wirksame Abdichtung der Filterkammer gegeben. Durch den auf den Membranrand nun wirksamen Druck im Inneren der Filterkammer wird der in die Nut eingreifende Schenkel des im Querschnitt winkelförmigen Membranrandes in die Nut eingepreßt und bewirkt hier eine wirksame Dichtung. Damit ist eine einwandfreie Abdichtung der Filterkammer während des Filtriervorganges gewährleistet. Wird nun am Ende des Filtriervorganges in den Raum zwischen Membran und der ihr zugeordneten Grundplatte ein Druckmedium unter oft noch höherem Druck eingeleitet, so wird der Membranrand im Bereich des in die Nut eingreifenden Schenkels angehoben, während der Rand der Membran im Bereich der Hinterschneidung ortsfest liegenbleibt, weil die Hinterschneidung hier eine Bewegung des Membranrandes verhindert. Hierbei wird trotz des Anhebens des Schenkels in der Nut eine besonders gute Dichtung dadurch erzielt, daß die dem Rezeß zugewandte Seite des Schenkels umso fester an die dem Rezeß zugewandte Wandung der Nut angedrückt wird. Somit ist in allen Belastungsfällen eine besonders wirkungsvolle Dichtung erzielt.

Für eine gute Abdichtung kann es sich als zweckdienlich erweisen, wenn die Übergänge des Bodens der Nut in deren Seitenwände ausgerundet sind und wenn die Übergänge der Stirnseite des in die Nut eingreifenden Schenkels des verstärkten Membranrandes in die Seitenwände dieses Schenkels ebenfalls abgerundet sind. Gleichzeitig wird hierdurch aber auch erreicht, daß bei einer scharfkantigen Ausbildung der Übergänge des Nutbodens in die Nutseitenwände auftretende Rißbildungen in der Grundplatte vermieden werden. Denn bei den bekannten Ausführungsformen, bei denen der Membranrand mit dem Schließdruck zumindest zum Teil beaufschlagt ist, traten diese Rißbildungen immer dann auf, wenn die in die Nut eingreifende Lippe diese Nut vollständig ausfüllte. Daher ließ man die Stirnseite der Lippe den Boden der Nut nicht berühren, um hier einen Luftraum zu haben, in den das inkompressible Gummi ausweichen konnte. Diese Ausbildungsform bereitet aber Schwierigkeiten in der Abdichtung.

Aus den gleichen Gründen ist es zweckmäßig, wenn die Übergangsfläche der Hinterschneidungsfläche in den zur Randebene parallelen Teil der stufenförmigen Vertiefung ausgerundet ist.

Ist die Filterpresse mit einem oder mehreren im Rezeß angeordneten Stütznocken versehen, dann weist die Membran im Bereich der Stütznocken ein Loch auf, durch das der bzw. die Stütznocken hindurchsteckbar ist bzw. sind. Bei dieser bekannten Ausbildung liegen die Stütznocken benachbarter Filterplatten aneinander an, ohne daß die aus Gummi hergestellten Membranen zwischen den Stütznocken liegen, so daß die Membranen nicht mit dem Schließdruck der Filterpresse beaufschlagt werden. Bei dieser Ausführungsform trägt die Membran rings um das Loch einen ringförmigen, der Grundplatte zugewandten Vorsprung, welcher in eine Ringnut der Grundplatte eingreift. Diese Stelle kann die Ursache für Undichtigkeiten bilden. An dieser Stelle springt die Membran von der Grundplatte ab, sobald in den Zwischenraum zwischen Membran und Grundplatte Druckluft eingelassen wird.

Diese Nachteile werden erfindungsgemäß dadurch vermieden, daß der Stütznocken kegelstumpfförmig seinen Querschnitt nach außen erweiternd gestaltet ist und daß die Membran rings um den Stütznocken einen als Randverstärkung ausgebildeten Membranrand aufweist, der im Querschnitt die Form eines Winkels hat, dessen einer Schenkel durch den Vorsprung gebildet ist und dessen anderer Schenkel einen abgeschrägten Rand aufweist und dadurch auf der an der Grundplatte anliegenden Seite länger als auf der gegenüberliegenden Seite ist, wobei die der Grundplatte zugewandte Oberfläche des Membranrandes unter die in der Randebene liegende Oberfläche des Stütznockens greift.

Bei dieser Ausbildung von Stütznocken und Membran springt die Membran nicht von der Grundplatte ab, wenn Druckluft in den Zwischenraum zwischen Membran und Grundplatte eingeführt wird. Die mit dieser Gestaltung des Membranrandes erreichte Dichtigkeit ist unerwartet hoch.

Das Wesen der Erfindung ist nachstehend anhand eines in der Zeichnung schematisch dargestellten Ausführungsbeispieles näher erläutert. Es zeigen :

Fig. 1 eine Ansicht der Grundplatte einer Membranfilterplatte,

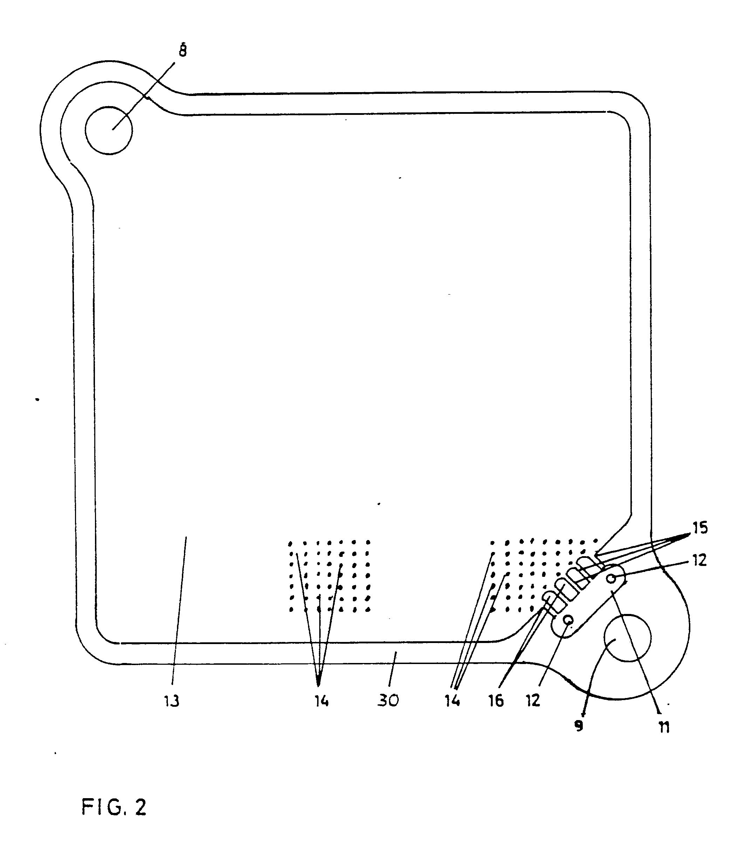

Fig. 2 die in die Grundplatte einzusetzende Membrane in Ansicht,

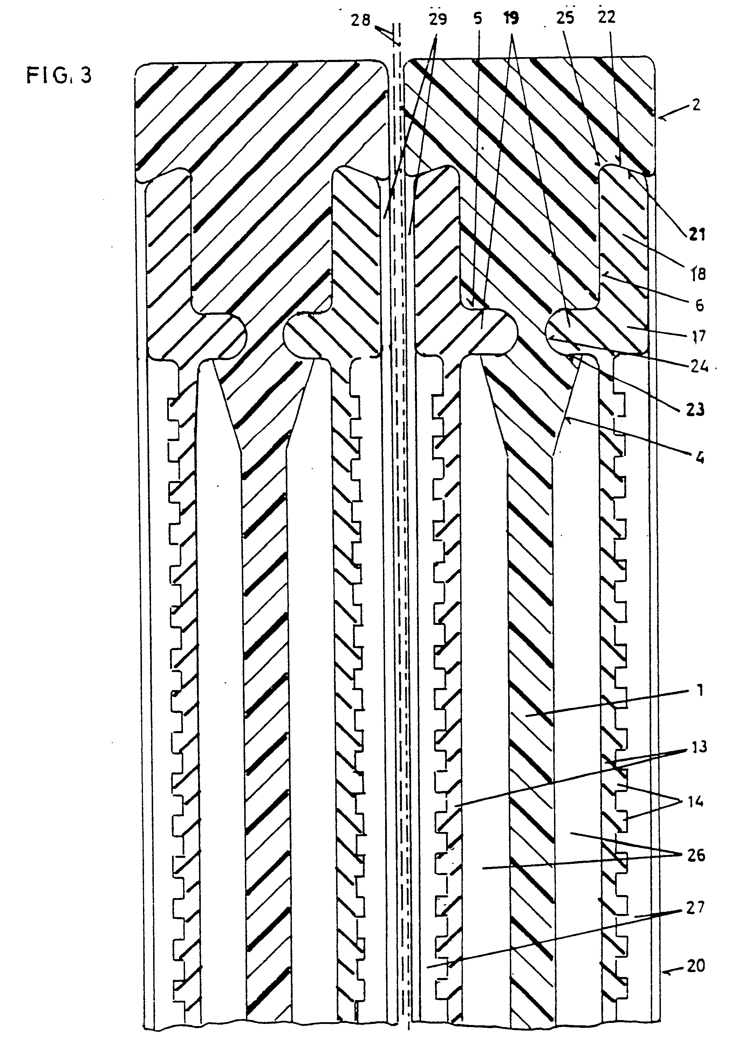

Fig. 3 einen Schnitt durch den Randbereich zweier in einer Filterpresse eingebrachten Membranfilterplatten, .

Fig. 4 einen Querschnitt durch den Membranrand, wie er am Filterplattenrand und im Bereich von Stütznocken ausgebildet ist, im drucklosen Zustand und beim Filtrieren,

Fig. 5 beim Einlassen von Druckluft in den Zwischenraum zwischen Membran und Grundplatte,

Fig. 6 eine Grundplatte mit einem mittig angeordneten Stütznocken,

Fig. 7 eine Membran mit einem Loch für den Stütznocken,

Fig. 8 einen Querschnitt durch den Stütznocken und den ihn umgebenden Membranteil.

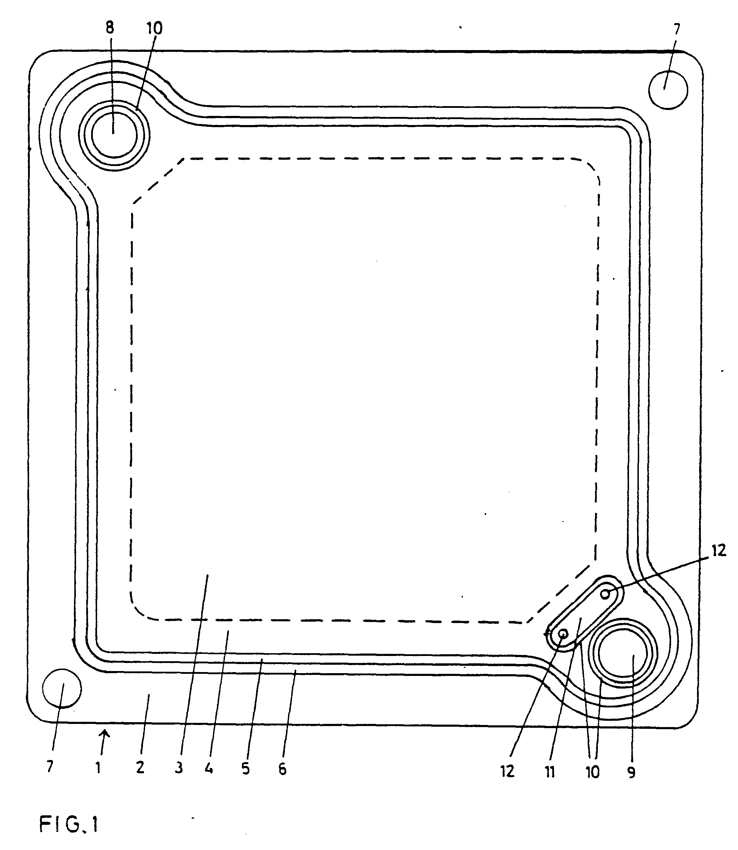

Die Grundplatte 1 weist einen ebenen Rand 2 auf, welcher den eine Vertiefung in der Grundplatte 1 bildenden Rezeß 3 allseitig umgibt. Dieser Rezeß 3 bildet zwischen den gestrichelt gezeichneten Randbereichen eine ebene Fläche, wie dies in Fig. 1 dargestellt ist. Zwischen dem ebenen Rand 2 und der ebenen Fläche des Rezesses 3 befindet sich eine schräge Übergangsfläche 4, welche im wesentlichen den Übergang zwischen dem Rand 2 und dem Rezeß 3 zusammen mit einer stufenförmigen Vertiefung 6 bildet. Im Übergangsbereich zwischen der schrägen Übergangsfläche 4 und der stufenförmigen Vertiefung 6 befindet sich eine Nut 5.

Die Grundplatte 1 weist Löcher 7 auf, durch die Dorne der Filterpresse als Führungsdorne steckbar sind. Die Suspensionszuführung erfolgt durch das Suspensionszuführungsloch 8, die Filtratabführung durch das Filtratabführungsloch 9. Beide Löcher 8, 9 sind von einer Nut 10 umgeben, der eine ähnliche Aufgabe wie der Nut 5 zufällt. Im Bereich des Filtratabführungsloches 9 ist eine Vertiefung 11 ausgebildet, von der Kanäle 12 im Inneren der Grundplatte 1 in das Filtratabführungsloch 9 führen.

An die Grundplatte 1 ist beidseitig je eine Membran 13 angesetzt. Diese weist auf ihrer Oberfläche eine Vielzahl von Noppen 14 auf, an der einen Seite ein Suspensionszuführungsloch 8 und auf der gegenüberliegenden Seite vor der Vertiefung 11 eine Reihe von Schlitzen 15 mit dazwischenliegenden Vorsprüngen 16. Durch die Schlitze 15 entweicht das Filtrat in die Vertiefung 11 und von dort in das Filtratabführungsloch 9.

Die mit den Noppen 14 besetzte Membran 13 ist im unbelasteten Zustand eben und weist einen im Querschnitt winkelförmig gebildeten Membranrand 17 auf, dessen einer Schenkel 18 parallel zur Randebene 20 liegt, während der andere Schenkel 19 im wesentlichen senkrecht abstehend in die Nut 5 eingreift. Der Schenkel 18 liegt in der stufenförmigen Vertiefung 6. Seine Oberfläche reicht nicht über die Randebene 20 heraus, sondern liegt innerhalb des von den beiden Randebenen 20 der Grundplatte 1 gebildeten Raumes. An der Grundplatte 1 wird die Membran 13 dadurch festgehalten, daß die Membranrandfläche 21, die zweckmäßigerweise als eine schräg verlaufende Fläche ausgebildet ist, an der Hinterschneidungsfläche 22 anliegt. Die Hinterschneidungsfläche 22 verhindert ein Herausfallen der Membran 13, weil der Membranrand 17 keilförmig dadurch eingespannt ist, daß die Membranrandfläche 21 an der schrägen Hinterschneidungsfläche 22 anliegt und die Schenkelwand 23 des Schenkels 19 an der Seitenwand der Seitenwand der Nut 5 ebenfalls fest anliegt. Die Stirnfläche 24 des Schenkels 19 ist abgerundet, ebenso wie der Boden der Nut 5 ausgerundet ist. Das erleichtert einerseits das Einsetzen des Membranrandes 17 in die Vertiefung 6 und die Nut 5, andererseits wird hierdurch eine hervorragende Abdichtwirkung erzielt. Auch die Übergangsfläche 25 zwischen der Hinterschneidungsfläche 22 und der stufenförmigen Vertiefung 6 ist ausgerundet.

Zwischen je zwei Membranen 13 ist eine Filterkammer 27 gebildet, jeweils zwischen der Grundplatte 1 im Bereich des Rezesses 3 und der Membran 13 ist eine Druckkammer 26 gebildet.

Zwischen je zwei Membranen 13 und zwischen den ebenen Rändern 2 benachbarter Grundplatten 1 sind Filtertücher 28 eingelegt. Zwischen je zwei Schenkeln 18 der Membranränder 17 benachbarter Membranen 13 befindet sich ein spaltförmiger Zwischenraum 29. Dieser bewirkt, daß der Schließdruck lediglich auf die ebenen Ränder 2 der Grundplatten 1 und nicht auf die Membranränder 17 der Membran 13 übertragen wird. Weiterhin bewirkt der Zwischenraum 29, daß die Schenkel 18 der Membranränder 17 durch die in der Filterkammer 27 befindliche Suspension auf die stufenförmige Vertiefung 6 und der Schenkel 18 in die Nut 5 gedrückt werden. Beim Einleiten von Druckmedium in die Druckkammern 26 bewirkt der Zwischenraum 29 weiterhin, daß der Membranrand 17 sich um ein kleines Stück aus der Nut 5 und von der stufenförmigen Vertiefung 6 abhebt, so daß der Schenkel 19 an der Nutwand umso stärker abdichtet und letztlich auch die Membranrandfläche 21 noch dichter an die Hinterschneidungsfläche 22 angedrückt wird.

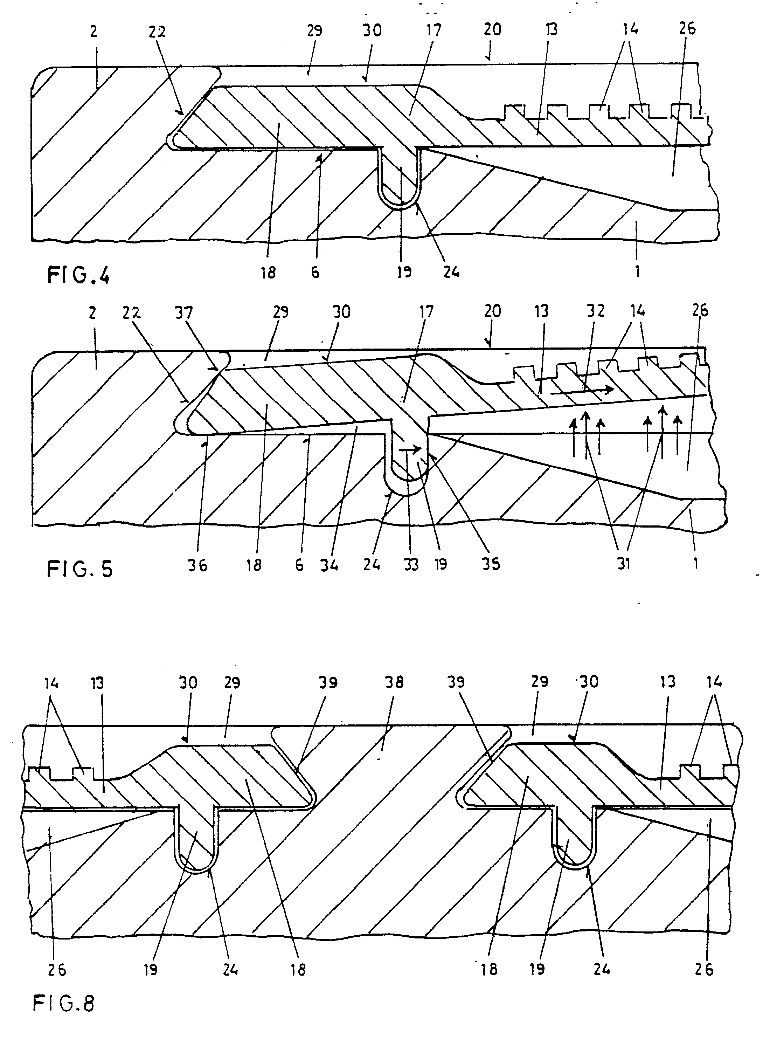

Die erfindungsgemäße Membranrandgestaltung ist in ihrer Wirkungsweise in den Fig. 4 und 5 erläutert : Im drucklosen Zustand und während des Filtrierens, wenn der Druck zwischen zwei Membranen 13 höher ist als der Druck zwischen jeder Membran 13 und der Grundplatte 1, befindet sich ein Zwischenraum 29 zwischen der Randebene 20 der Grundplatte 1 und der Oberfläche 30 des Schenkels 18 des winkelförmig im Querschnitt gestalteten Membranrandes 17. Dieser Zwischenraum 29 ist für die Abdichtfunktion dann von hoher Wichtigkeit, wenn in die zwischen Membran 13 und Grundplatte 1 gebildete Druckkammer 26 Druckluft eingeführt wird. Ist dies der Fall, wölbt sich die Membran 13 nach außen, wie es die Fig. 5 zeigt, denn die durch Pfeile dargestellte Druckluft 31 spannt die Membran 13, so daß eine Spannung 32 entsprechend dem Pfeil in der Membran 13 auftritt, die den Schenkel 19 der Membran 13 in Richtung des Pfeiles 33 drückt und dadurch die Abdichtung verbessert. Durch die Druckluft 31 wird aber der gesamte winkelförmige Membranrand 17 aus seiner bisherigen Lage herausgehoben und gegenüber seiner bisherigen, in Fig. 4 dargestellten Lage in die in Fig 5 dargestellte Lage verschwenkt. Durch diese Verschwenkbewegung entsteht zwar zwischen der Oberfläche der stufenförmigen Vertiefung 6 und der inneren Oberfläche des Schenkels 18 des Membranrandes 17 ein Hohlraum 34. Der Membranrand 17 wird jetzt aber mit besonderer Kraft gegen die Dichtstellen 35, 36, 37 gepreßt. Das führt zu einer erhöhten Abdichtung, die nur dann möglich ist, wenn ein ausreichender Zwischenraum 29 zwischen der äußeren Oberfläche 30 des winkelförmigen Membranrandes 17 und der gegenüberliegenden Oberfläche 30 eines gegenüberliegenden Membranrandes 17 vorhanden ist.

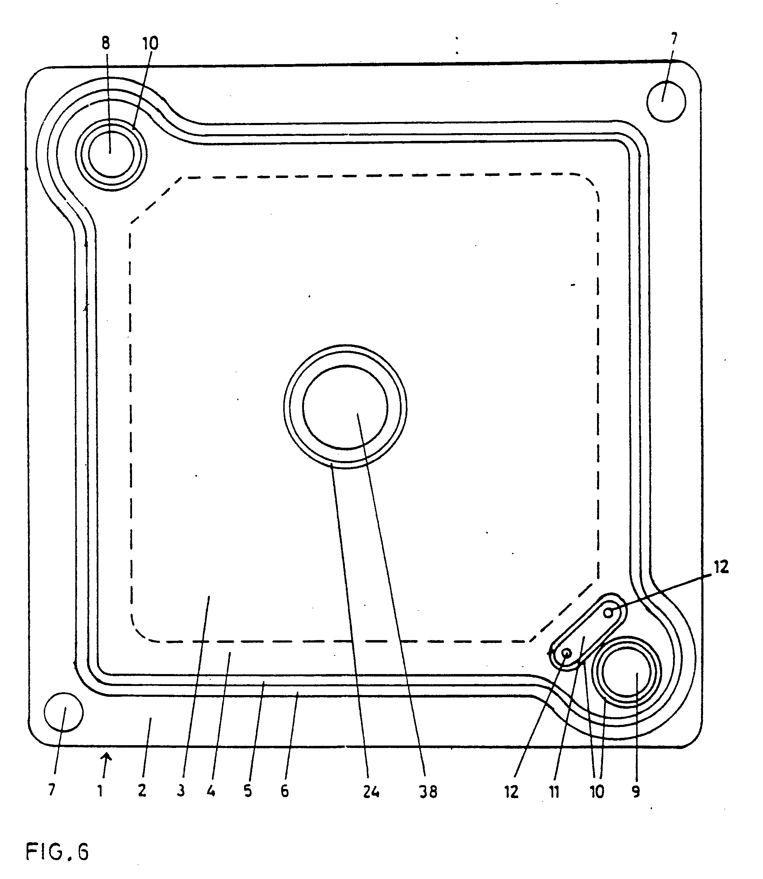

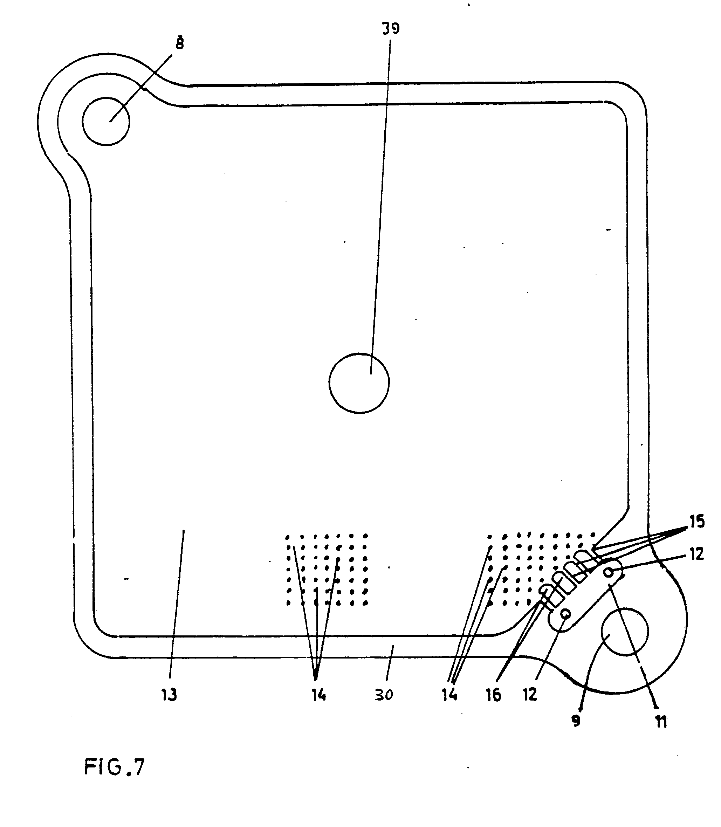

Ist die Grundplatte 1 mit einem Stütznocken 38 ausgestattet, so weist die Membran 13 an dieser Stelle ein Loch 39 auf. Im Ausführungsbeispiel der Fig. 6 und 7 sind Stütznocken 38 und Loch 39 mittig in der Grundplatte 1 und in der Membran 13 angeordnet.

Die Ausbildung des Stütznockers 38 ist in Fig. 8 näher dargestellt :

Der Stütznocken 38 ist im Querschnitt kegel stumpfförmig ausgebildet, wobei die kleinere Fläche des Kegelstumpfes einstückig mit der Grundplatte 1 hergestellt ist. Der Stütznocken 38 erweitert seinen Querschnitt umso mehr, je weiter man sich von seiner Befestigungsstelle an der Grundplatte 1 entfernt. Die Membran 13 weist rings um ihr Loch 39 einen verstärkten Membranrand 17 auf, welcher wie der Membranrand 17 am Rande der Grundplatte 1 ausgebildet ist.

Liste der Bezugszeichen :

1 Grundplatte
2 ebener Rand
3 Rezeß
4 schräge Übergangsfläche
5 Nut
6 stufenförmige Vertiefung
7 Loch
8 Suspensionszuführungsloch
9 Filtratabführungsloch
10 Nut
11 Vertiefung
12 Kanal
13 Membran
14 Noppen
15 Schlitz

16 Vorsprung
17 Membranrand
18 Schenkel
19 Schenkel
20 Randebene
21 Membranrandfläche
22 Hinterschneidungsfläche
23 Schenkelwand
24 Stirnfläche
25 Übergangsfläche
26 Druckkammer
27 Filterkammer
28 Filtertuch
29 Zwischenraum
30 Oberfläche
31 Druckluft
32 Spannung
33 Pfeil
34 Hohlraum
35 Dichtstelle
36 Dichtstelle
37 Dichtstelle
38 Stütznocken
39 Loch

**Patentansprüche**

1. Filterpresse mit einer Vielzahl von Membranfilterplatten, die aus einer Grundplatte und aus mindestens einer an der Seitenfläche der Grundplatte angebrachten elastischen Membran bestehen, von denen die Grundplatte einen umlaufenden erhöhten ebenen Rand aufweist, der einen Rezeß einschließt, die Grundplatte am Übergang des Randes in den Rezeß eine umlaufende stufenförmige Vertiefung für die Aufnahme des Membranrandes aufweist, die stufenförmige Vertiefung der Grundplatte nach außen hin eine Hinterschneidung und nach innen hin eine Nut aufweist, die Membran einen als Randverstärkung ausgebildeten Membranrand von der Querschnittsform eines Winkels aufweist, deren einer nach außen gerichteter Schenkel einen abgeschrägten Rand aufweist und dadurch auf der an der Grundplatte anliegenden Seite länger als auf der gegenüberliegenden Seite ist und deren anderer Schenkel auf die Grundplatte hin gerichtet ist und in deren Nut eingreift, dadurch gekennzeichnet, daß der Membranrand (17) der Membran (13) zwischen der Hinterschneidungsfläche (22) und der dem Rezeß (3) zugewandten Schenkelwand (23) der Nut (5) in der Grundplatte (1) eingeklemmt (verkeilt) ist, daß die Oberfläche des Membranrandes (17) der Membran (13) unterhalb der Randebene (20) der Grundplatte (1) liegt und daß die Ränder (2) der Grundplatten (1) in der Filterpresse lediglich unter eventuellem Einschluß von Filtertüchern (28) und/oder Dichtungen zwischen sich aneinander anliegen.

2. Filterpresse nach Anspruch 1, dadurch gekennzeichnet, daß die Übergänge des Bodens der Nut (5) in deren Seitenwände ausgerundet sind.

3. Filterpresse nach Anspruch 1, dadurch gekennzeichnet, daß die Übergangsfläche (25) der Hinterschneidungsfläche (22) in den zur Randebene (20) parallelen Teil der stufenförmigen Vertiefung (6) ausgerundet ist.

4. Filterpresse nach Anspruch 1, mit im Rezeß angeordneten Stütznocken, in deren Bereich die Membran ein Loch aufweist, durch das der Stütznocken hindurchsteckbar ist wobei die Membran rings um das Loch einen ringförmigen, der Grundplatte zugewandten Vorsprung trägt, welcher in eine Ringnut in der Grundplatte eingreift, dadurch gekennzeichnet, daß der Stütznocken (38) kegelstumpfförmig seinen Querschnitt nach außen erweiternd gestaltet ist, daß die Membran (13) rings um den Stütznocken (38) einen als Randverstärkung aus gebildeten Membranrand (17) aufweist, der im Querschnitt die Form eines Winkels hat, dessen einer Schenkel (19) durch den Vorsprung gebildet ist und dessen anderer Schenkel (18) einen abgeschrägten Rand aufweist und dadurch auf der an der Grundplatte (1) anliegenden Seite länger als auf der gegenüberliegenden Seite ist, wobei die der Grundplatte 1 zugewandte Oberfläche des Membranrandes (17) unter die in der Randebene (20) liegende Oberfläche des Stütznockens (38) greift.

## Claims

1. Filter press having a plurality of membrane filter plates which consist of a base plate and at least one elastic membrane provided on the side face of the base plate and of which the base plate has a circumferential raised planar edge which encloses a recess ; the base plate has at the transition of the edge into the recess a circumferential stepped depression for receiving the membrane edge ; the stepped depression of the base plate has, towards the outside, an undercut and, towards the inside, a groove ; the membrane has a membrane edge which is formed as a thickened edge portion and is of the cross sectional form of an angle, the one side of which, directed outwards, has a bevelled edge and thus is longer on the side adjacent the base plate than on the opposite side and the other side of which is directed towards the base plate and engages in the latter's groove, characterised in that the membrane edge (17) of the membrane (13) is clamped (wedged) between the undercut surface (22) and the side wall (23) of the groove (5) facing the recess (3) in the base plate (1), in that the surface of the membrane edge (17) of the membrane (13) lies below the edge plane (20) of the base plate (1) and in that the edges of the base plates (1) in the filter press butt against each other solely with the possible inclusion of filter cloths (28) and/or seals between them.

2. Filter press according to claim 1, characterised in that the transitions from the base of the groove (5) to its side walls are rounded.

3. Filter press according to claim 1, characterised in that the transitional surface (25) from the undercut surface (22) to the portion of the stepped depression (6) parallel to the edge plane (20) is rounded.

4. Filter press according to claim 1 having supporting cams which are arranged in the recess and in the region of which the membrane has a hole through which the supporting cam can be inserted, the membrane having, around the hole, an annular projection which faces the base plate and which engages into an annular groove in the base plate, characterised in that the supporting cam (38) is shaped in the form of a truncated cone expanding its cross section outwards, in that the membrane (13) has, around the supporting cam (38), a membrane edge (17) which is formed as a thickened edge portion and which, in cross section has the form of an angle, the one side (19) of which is formed by the projection and the other side (18) of which has a bevelled edge and thus is longer on the side adjacent the base plate (1) than on the opposite side, the surface of the membrane edge (17), which faces the base plate (1), engaging under the surface of the supporting cam (38) lying in the edge plane (20).

## Revendications

1. Filtre-presse comportant de multiples plaques-filtres à membrane se composant d'une plaque de base et d'au moins une membrane élastique montée sur la face latérale de la plaque de base, plaques-filtres dont la plaque de base présente un bord plan relevé qui en fait le tour et enferme une partie en retrait, la plaque de base présentant, au raccordement entre bord et partie en retrait, une cavité qui fait le tour et est formée en gradins, destinée à recevoir le bord de la membrane, la cavité formée en gradins de la plaque de base présentant vers l'extérieur une contre-dépouille et vers l'intérieur une gorge, la membrane présentant un bord de membrane réalisé sous la forme d'un renforcement marginal, ayant une section transversale en forme d'équerre, renforcement dont une branche orientée vers l'extérieur présente un bord chanfreiné et est de ce fait plus longue, sur la face adjacente à la plaque de base, que sur la face opposée, et dont l'autre branche est orientée vers la plaque de base et s'engage dans la gorge de cette dernière, caractérisé en ce que le bord de membrane (17) de la membrane (13) est serré (coincé) dans la plaque de base (1) entre la face (22) en contre-dépouille et la paroi de branche (23) de la gorge (5) qui est tournée vers la partie en retrait (3), en ce que la surface du bord de membrane (17) de la membrane (13) est située au-dessous du plan de bordure (20) de la plaque de base (1) et en ce que les bords (2) des plaques de base (1) sont contigus les uns aux autres dans le filtre-presse, uniquement des tissus-filtres (28) et/ou des joints étant insérés éventuellement entre eux.

2. Filtre-presse selon la revendication 1, caractérisé en ce que les raccords entre le fond de la gorge (5) et ses parois latérales sont arrondis.

3. Filtre-presse selon la revendication 1, caractérisé en ce que la face (25) de raccordement de la face en contre-dépouille (22) avec la partie, parallèle au plan de bordure (20), de la cavité (6) formée en gradins, est arrondie.

4. Filtre-presse selon la revendication 1 avec des ergots de soutien disposés dans la partie en retrait, dans la zone desquels la membrane présente un trou dans lequel l'ergot de soutien peut être enfoncé, la membrane portant tout autour du trou une saillie de forme annulaire tournée vers la plaque de base, saillie qui s'engage dans une gorge annulaire située dans la plaque de base, caractérisé en ce que l'ergot de soutien (38) est réalisé en forme de tronc de cône dont la section transversale s'agrandit en allant vers l'extérieur, en ce que la membrane (13) présente tout autour de l'ergot de soutien (38) un bord de membrane (17), réalisé sous la forme d'un renforcement marginal, qui a une section transversale en forme d'équerre, dont une branche (19) est formée par la saillie et dont l'autre branche (18) présente un bord chanfreiné et est de ce fait plus longue sur la face adjacente à la plaque de base (1) que sur la face opposée, la surface du bord de membrane (17) qui est tournée vers la plaque de base (1) s'engageant sous la surface de l'ergot de soutien (38) qui est située dans le plan de bordure (20).

EP 0 247 288 B1

FIG.1

FIG. 2

FIG. 3

EP 0 247 288 B1

FIG.4

FIG.5

FIG.8

FIG.6

FIG.7